# EUROPÄISCHE PATENTSCHRIFT

(11) **EP 4 454 451 B1**
(45) Veröffentlichungstag und Bekanntmachung des Hinweises auf die Patenterteilung: **09.12.2026**
(21) Anmeldenummer: 24166352.5
(22) Anmeldetag: 26.03.2024
(51) Int. Cl.: A01D 41/127

(54) **SENSORANORDNUNG FÜR EINEN MÄHDRESCHER**
SENSOR ARRANGEMENT FOR A COMBINE HARVESTER
AGENCEMENT DE CAPTEUR POUR UNE MOISSONNEUSE-BATTEUSE

(30) Priorität: 25.04.2023 DE 102023110536
(43) Veröffentlichungstag der Anmeldung: 30.10.2024
(73) Patentinhaber: Deere & Company, Moline, IL 61265 (US)
(72) Erfinder: Broschart, Marco, Mannheim (DE); Trausch, Sydney, Mannheim (DE)
(74) Vertreter: Holst, Sönke

(56) Entgegenhaltungen:
- EP-A1- 1 839 478
- EP-A1- 3 072 378
- US-A1- 2015 080 069
- US-B2- 10 058 029
- US-B2- 11 083 137
- US-B2- 7 362 233

## Beschreibung

### Stand der Technik

Mähdrescher dienen zur Ernte von Korn. Die oberirdischen Teile oder Früchte von Pflanzen, wie Soja, Weizen oder Hafer, werden abgeschnitten oder aufgesammelt oder abgestreift oder die Fruchtstände der Pflanzen, wie Mais oder Sonnenblumen, werden abgetrennt und einer Dresch- und Trenneinrichtung zugeführt, um die Körner (in der Gesamtheit als "das Korn" bezeichnet) von den übrigen Bestandteilen des Ernteguts zu trennen. Nach dem Dresch- und Trennvorgang befinden sich noch Verunreinigungen im Korn, wie Strohteilchen und Spreu. Das beim Dreschen und Trennen gewonnene Gemisch aus Korn und Verunreinigungen wird daher einem Reinigungssystem zugeführt, das üblicherweise ein Obersieb und ein Untersieb und optional ein Vorsieb und/oder einen Förderboden umfasst.

Die Siebe und ggf. Förderböden sind üblicherweise an vorderen und hinteren Hängern aufgehängt und werden mittels eines Exzenter-Antriebes bewegt, wie er beispielsweise in der US 2013/0109450 A1, EP 3 563 660 A1, EP 2 850 938 A1 und in der Figur 3 der vorliegenden Unterlagen gezeigt wird. Auf diese Weise werden die Siebe und Förderböden in eine periodische, pendelnde Hin- und Herbewegung versetzt, bei der sie sich auf Bahnen nach vorn und hinten und nach oben und unten bewegen, deren Form durch einen Kreisbogen oder Teil einer Ellipse beschrieben wird. Zudem werden die Siebe von unten her mit einem Luftstrom beaufschlagt. Man erreicht so, dass das Gemisch auf dem Sieb periodisch nach oben geworfen wird (am hinteren, oberen Umkehrpunkt der Bahn) und nach Zurücklegen einer Wurfparabel wieder auf dem Sieb landet. Durch den Luftstrom und den Aufprall auf dem Sieb nach dem Wurf wird das schwerere Korn von den leichteren Verunreinigungen getrennt. Ähnlich ist die Vorgehensweise bei Strohschüttlern, die an einer Kurbelwelle angebracht werden. Zudem werden auch Förderer bzw. Förderböden in der beschriebenen Weise angetrieben.

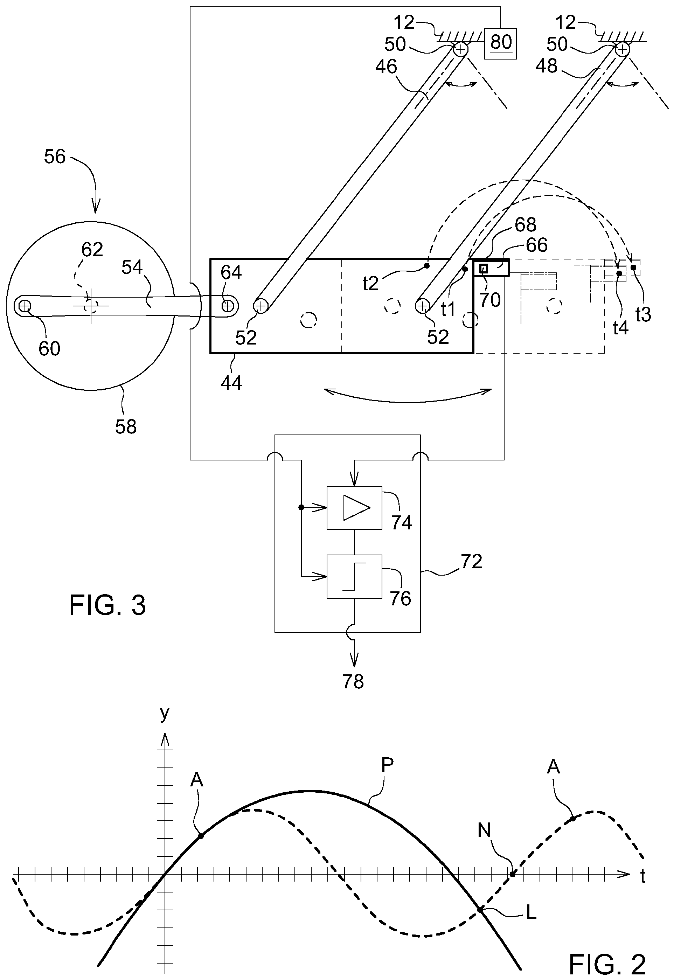

Man erhält demnach bei zeitlich konstanter Drehzahl des Exzenter-Antriebs eine sich zumindest etwa sinusförmig ändernde, vertikale Position Y des Siebs oder Förderbodens als Funktion der Zeit t, wie in der Figur 2 gezeigt ist. Der Hauptanteil des Ernteguts wird kurz vor dem oberen Umkehrpunkt am Abwurfpunkt A nach oben und hinten hin abgeworfen und legt dann die Wurfparabel P zurück. Schließlich landet es wieder am Punkt L auf dem Sieb. Der Punkt N entspricht dem Nulldurchgang des Siebs, d.h. der Mittelposition. Es ist jedoch nicht so, dass das komplette Erntegut am Abwurfpunkt A abgeworfen wird und am Punkt L wieder landet, sondern es finden auch Abwurf- und Landevorgänge zeitlich und räumlich vor und nach den Punkten A und L statt.

Vielfach sind den Sieben und/oder Förderböden Prallplattensensoren zugeordnet, welche auftreffende Körner erfassen. Diese Prallplattensensoren können an einer beliebigen Stelle entlang des Siebs oder Förderbodens angeordnet sein, um den Körnerdurchsatz an der betreffenden Stelle zu erfassen (vgl. beispielsweise EP 3 563 660 A1), oder sie werden am Abgabeende positioniert, um die auf das Feld oder in einen Überkehrförderer abgegebenen Körner zu erfassen (DE 41 33 976 A1 mit einem Prallplattensensor am Abgabeende eines Strohschüttlers) oder sie bewegen sich nicht mit dem Sieb oder Förderboden, sondern sind am Rahmen des Mähdreschers abgestützt und im Strom des von einem Sieb abgegebenen Ernteguts angeordnet (EP 1 516 522 A2, WO 2016/058890 A1) oder die Prallplattensensoren sind am stromab liegenden Ende der Förderböden angeordnet, um den Korndurchsatz zwischen einer Trenneinrichtung und einer Reinigung zu erfassen, wobei die Signale mehrerer Prallplattensensoren zur Erzeugung einer Kurve kombiniert werden können (US 2015/0080069 A1). Die Prallplattensensoren umfassen neben der Fläche, auf welche die Körner aufprallen, einen Signalaufnehmer zur Umsetzung der beim Aufprall entstehenden, mechanischen Schwingungen in elektrische Signale, die durch eine Auswertungsschaltung ausgewertet werden. Die Signalaufnehmer können als Piezo-Kristall (DE 37 31 80 A1), druckempfindliche Schicht (EP 2 977 735 A2, EP 3 639 645 A1) oder MEMS-Element (mikro-elektro-mechanisches System, s. EP 2 761 984 A1) ausgeführt sein.

Die Prallplattensensoren erkennen demnach einzelne Körner anhand der Schwingungen, die beim Aufprall eines Korns auf die Prallplatte entstehen. Die Schwierigkeit liegt darin, die von den Körnern erzeugten Signale von Stör- und Untergrundgeräuschen zu unterscheiden, zumal die aufprallenden Körner abhängig von den jeweiligen Umgebungsbedingungen und mechanischen Eigenschaften der Körner (Masse, Feuchtigkeit, Aufprallgeschwindigkeit, ggf. dämpfende Materialien im Materialstrom etc.) unterschiedliche Signale produzieren. Es wurde daher vorgeschlagen, gewisse Umgebungsbedingungen bei der Auswertung der Signale der Prallplattensensoren durch eine diese Bedingungen berücksichtigende Signalauswertung zu berücksichtigen (EP 3 141 102 A1, EP 2 742 791 A2, EP 3 222 133 A1), nämlich physische Ernteguteigenschaften bzw. die Erntegutart, Seitenneigung und Gebläsedrehzahl.

### Aufgabe

Ein weiterer, im Stand der Technik bei der Auswertung der Signale nicht berücksichtigter Parameter ist der Aufprallwinkel der Körner auf den Prallplattensensor, der auch einen gewissen Einfluss auf das Signal hat (Liang, Zhenwei et al., Sensor for monitoring rice grain sieve losses in combine harvesters, Biosystems Engineering 147 (2016), Seiten 51-66).

Wenn man sich das Diagramm der Figur 2 unter der Annahme ansieht, dass ein Prallplattensensor am Sieb am Punkt L angebracht ist und dass die Abwurf- und Landevorgänge der Körner zeitlich und räumlich vor und nach den Punkten A und L stattfinden (d.h. anstelle der Wurfparabel P eine Schar an Parabeln vorliegt, die vor und nach der gezeigten Kurve P liegen), ist ersichtlich, dass die unterschiedlichen Abwurf- und Landezeitpunkte zu unterschiedlichen Aufprallwinkeln der Körner auf dem Prallplattensensor führen, da sich das Sieb und somit auch die Prallplatte mit zeitlich variierender Geschwindigkeit bewegt. Wenn somit ein erstes Korn zu einem Zeitpunkt t1 abgeworfen wird und ein zweites Korn zu einem späteren Zeitpunkt t2, hat die Prallplatte zum Landezeitpunkt t3 des ersten Korns auch eine andere Geschwindigkeit und eine andere Position als zum Landezeitpunkt t4 des zweiten Korns. Hierzu wird auf die Figur 3 verwiesen. Man beachte, dass sich das Sieb zwischen den unterschiedlichen Zeitpunkten t1 bis t4 weiterbewegt. Da jedoch der Aufprallwinkel der Körner auf dem Prallplattensensor das abgegebene Signal beeinflusst, entstehen abhängig vom jeweiligen Abwurf- und Landezeitpunkt unterschiedliche Signale des Prallplattensensors. Bei flacheren Auftreffwinkeln (t3) entstehen in der Regel kleinere Signale als bei steileren Auftreffwinkeln (t4). Das hat wiederum zur Folge, dass die Genauigkeit der Erkennung der Körner nicht hinreicht, wenn man - wie im Stand der Technik - eine statische, vom Auftreffzeitpunkt und somit -winkel unabhängige Signalverarbeitung verwendet. Diese Problematik tritt auch, wenn auch in geringerem Maße dann auf, wenn der Prallplattensensor sich nicht mit dem Sieb mitbewegt, da auch dort unterschiedliche Aufprallwinkel der Körner abhängig vom Abgabeort und -zeitpunkt des Korns auf dem Sieb vorliegen. Wie bereits angemerkt, können die besagten Prallplattensensoren nicht nur mit Sieben, sondern auch mit Förderböden oder Strohschüttlern zusammenwirken.

Die Aufgabe der vorliegenden Erfindung wird darin gesehen, eine gegenüber dem Stand der Technik verbesserte Sensoranordnung für einen Mähdrescher vorzuschlagen, welche die erwähnten Nachteile nicht oder nur in vermindertem Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher mit einer Sensoranordnung umfasst einen Förderer für Körner enthaltendes Erntegut, der durch einen Antrieb in eine periodische Bewegung versetzbar ist, einen dem Förderer zugeordneten Prallplattensensor, der konfiguriert ist, in Reaktion auf einen Aufprall eines Korns ein elektrisches Signal abzugeben, und eine Auswertungsschaltung, die signalübertragend mit dem Prallplattensensor verbunden und konfiguriert ist, das vom Prallplattensensor erzeugte Signal zu verarbeiten und unter Berücksichtigung einer weiteren Information ein durch ein Korn erzeugtes Signal zu erkennen und ein entsprechendes Ausgangssignal abzugeben. Die weitere Information betrifft die jeweilige Lage des Förderers entlang seiner Bewegung.

Auf diese Weise kann die von der Position des Förderers und somit des Auftreffwinkels des Korns auf dem Prallplattensensor abhängige Empfindlichkeit des Prallplattensensors ausgeglichen werden-

Der Prallplattensensor kann sich mit Förderer bewegen oder stationär sein.

Der Förderer kann durch Hänger an einem Fahrgestell aufgehängt und durch den Antrieb in eine pendelnde Bewegung versetzbar sein oder er ist an einer mit dem Antrieb gekoppelten Kurbelwelle angebracht. Der Förderer kann somit ein Sieb oder ein Förderboden oder ein Strohschüttler sein.

Die Auswertungsschaltung ist konfiguriert, anhand der Information einen von der jeweiligen Lage des Förderers abhängigen Aufprallwinkel des Korns auf den Prallplattensensor zu berücksichtigen, um die vom Aufprallwinkel des Korns abhängige Empfindlichkeit des Prallplattensensors zu kompensieren. Im Einzelnen ist die Auswertungsschaltung konfiguriert, einen von der jeweiligen Lage des Förderers abhängigen Verstärkungsfaktor und/oder einen davon abhängigen Schwellenwert anzuwenden und/oder Signale des Prallplattensensors bei bestimmten Lagen des Förderers zu ignorieren.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: ein Weg-Zeit-Diagramm eines Siebs der Reinigung des Mähdreschers, und
- Fig. 3: eine schematische seitliche Ansicht des Siebes in verschiedenen Bewegungsphasen mit einer zugehörigen Sensoranordnung.

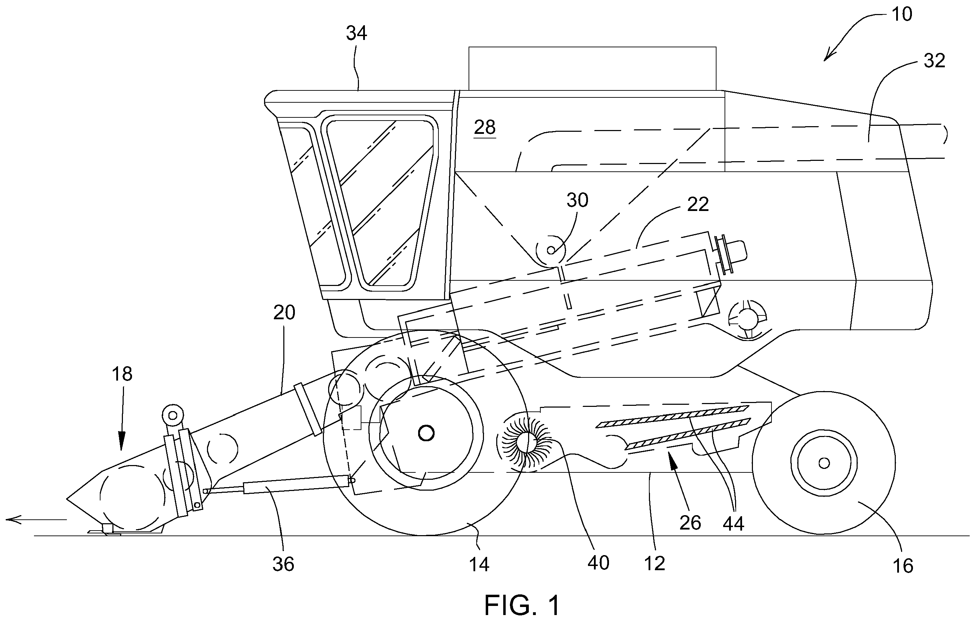

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder andere, dreschbare Halmfrüchte von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert.

Die Reinigungseinrichtung 26 umfasst in an sich bekannter Weise ein oberes Sieb 44 und ein unteres Sieb 44, die durch ein Gebläse 40 mit einem die Siebe nach hinten und oben durchströmenden Luftstrom beaufschlagt werden. Die Größe der Sieböffnungen und die Drehzahl des Gebläses 44 kann in an sich bekannter Art durch eine selbsttätige Reinigungseinstellung oder durch den Bediener aus der Fahrerkabine 34 verändert werden. Das vom oberen Sieb 44 am hinteren Ende abgegebene Gemisch wird durch einen Spreuverteiler oder einen Strohhäcksler auf dem Feld verteilt und das vom unteren Sieb am hinteren Ende abgegebene Gemisch wird durch einem Überkehrförderer einem weiteren Dreschvorgang zugeführt, sei es durch einen separaten Nachdrescher oder das Axialdreschwerk 22.

Die Figur 3 zeigt detaillierter, wie die Siebe 44 aufgehängt sind und angetrieben werden. Bei dem in der Figur 3 gezeigten Sieb 44 kann es sich um das obere Sieb 44 oder das untere Sieb 44 der Figur 1 handeln. Es wäre denkbar, jedes der Siebe 44 mit dem gezeigten Antrieb auszustatten, oder beide Siebe 44 zu koppeln und mit einem gemeinsamen Antrieb zu versehen. Das in der Figur 2 gezeigte Sieb 44 ist an einem vorderen Hänger 46 und einem hinteren Hänger 48 aufgehängt, die jeweils mit ihren oberen Enden an mit dem Fahrgestell 12 gekoppelten Lagerungen 50 um horizontale und quer zur Vorwärtsrichtung des Mähdreschers 10 verlaufende Achsen frei schwenkbar gelagert sind. Die Hänger 46 sind zudem mit ihren unteren Enden durch Lagerungen 52 um horizontale und quer zur Vorwärtsrichtung des Mähdreschers 10 verlaufende Achsen frei schwenkbar an einem Rahmen des Siebes 44 gelagert. Gleichartige Hänger 46, 48, und Lagerungen 50, 52 sind auch auf der anderen, in der Figur 3 nicht gezeigten Seite des Mähdreschers 10 vorgesehen. Weiterhin ist das Sieb 44 über eine Kurbelstange 54 mit einem Exzentertrieb 56 gekoppelt, der sich aus einem mittig um eine Achse 62 drehbar gelagerten, durch einen Antrieb in Drehung versetzbares Antriebsrad 58 mit einem exzentrisch zur Achse 62 angeordneten Zapfen 60 aufbaut. Die Kurbelstange 54 ist einen Endes mit dem Zapfen 60 drehbar verbunden und anderen Endes mit einer Lagerung 64 am Sieb 44 angekoppelt. Die Achse 62 und die Achsen des Zapfens 60 und der Lagerung 64 sind horizontal und quer zur Vorwärtsrichtung des Mähdreschers 10 orientiert. Der Antrieb versetzt das als Förderer dienende Sieb 44 somit in eine periodische Hin- und Herbewegung, wie in der Figur 3 durch die Pfeile angedeutet wird. Man erhält das in der Figur 2 gezeigte Weg-Zeit-Diagramm des Siebs 44.

Am rückwärtigen Abgabeende des Siebs 44 ist ein Prallplattensensor 66 angebracht (oder zwei oder mehrere Prallplattensensoren 66 sind entlang der Breite des Siebs 44 an dessen rückwärtigem Ende verteilt). Der oder die Prallplattensensoren 66 sind in an sich bekannter Weise mit einer oberen, dem Erntegutfluss zugewandten Platte 68, auf welche das Erntegut einschließlich der darin enthaltenen Körner aufprallen kann, und einem mechanisch mit der Platte 68 gekoppelten Signalaufnehmer 70. Die Platte 68 und der Signalaufnehmer 70 können auch in einem einzigen Element integriert sein, z.B. in einer druckempfindlichen Folie (EP 2 977 735 A2, EP 3 639 645 A1) oder als Signalaufnehmer 70 findet in an sich bekannter Weise ein Piezokristall oder mikro-mechanisch-elektrisches System (MEMS) oder ein beliebiger anderer Wandler (Mikrofon o. ä.). Verwendung.

Der Signalaufnehmer 70 ist durch eine Leitung oder drahtlos (über eine Funk-Verbindung o.ä.) mit einer Auswertungsschaltung 72 verbunden, die einen Verstärker 74 und eine Schwellwert-Schaltung 76 umfasst. Ein Ausgangssignal 78 der Auswertungsschaltung 72 wird einer Steuereinrichtung (nicht gezeigt) zugeführt, die dem Bediener in der Kabine die Anzahl der je Zeiteinheit erfassten Körner, die somit die Verluste am unteren Sieb 44 oder die Anzahl der je Zeiteinheit in die Überkehr einlaufenden Körneranzahlen am oberen Sieb 44 repräsentieren, anzeigen kann. Diese Daten können von der Steuereinrichtung auch zur selbsttätigen Einstellung der Gebläsedrehzahl und der Sieböffnungen verwendet werden.

Die Auswertungsschaltung 72 hat die Aufgabe, die von auf den Prallplattensensor 66 aufprallenden Körnern erzeugten Signale von störenden Signalen zu unterscheiden, die beispielsweise durch aufprallende Strohteilchen verursacht werden können. Die vom Signalaufnehmer 70 einlaufenden Signale werden durch den Verstärker 74 verstärkt und die Schwellwert-Schaltung 76 erkennt anhand bestimmter Eigenschaften des verstärkten Signals (u.a. Amplitude, vorzugsweise aber auch die Signalform), ob das jeweils erhaltene Signal auf ein Korn zurückzuführen ist oder nicht. Nur im Falle, dass die Schwellwert-Schaltung ein Korn erkennt, wird ein entsprechendes Ausgangssignal 78 abgegeben. Mögliche Ausführungsformen und Details für die Auswertungsschaltung 72 finden sich in der EP 3 222 133 A1. In an sich bekannter Weise wird die Auswertungsschaltung 72 vor bzw. während einem Erntevorgang kalibriert, d.h. Verlustkörner auf dem Feld werden ausgezählt und mit der vom Prallplattensensor 66 gemessenen Körneranzahl verglichen und die Auswertungsschaltung 72 entsprechend angepasst. Zudem kann die Auswertungsschaltung 72 in an sich bekannter Weise bestimmte Erntegut- und Arbeitsbedingungen berücksichtigen, wie in EP 3 141 102 A1, EP 2 742 791 A2 und EP 3 222 133 A1 beschrieben.

In der Figur 3 ist das Sieb 44 in verschiedenen Stadien der Bewegung gezeigt, nämlich am vorderen und hinteren (oberen) Umkehrpunkt und am mittleren, unteren Umkehrpunkt. Das auf dem Sieb 44 liegende Gemisch aus Körnern und Verunreinigungen (von Korn verschiedenes Material, wie Spreu oder Strohteilchen) bewegt sich aufgrund der Schwingung des Siebs 44 und des Luftstroms des Gebläses 40 von links nach rechts. Kurz vor dem hinteren, oberen Umkehrpunkt wird das Gemisch nach oben hin abgeworfen und landet etwas später wieder auf dem Sieb 44 (bzw. auf dem Prallplattensensor 66).

In der Figur 3 sind zwei Beispiele für mögliche Flugbahnen eines Korns eingezeichnet, zur Veranschaulichung in etwas übertriebener Weise. Ein erstes Korn verlässt das Sieb 44 zu einem Zeitpunkt t1, an dem sich das Sieb 44 in einer Bewegung nach hinten und oben befindet. Ein zweites Korn verlässt das Sieb 44 etwas später, nämlich zu einem Zeitpunkt t2, wenn das Sieb 44 sich schon fast am oberen, rückwärtigen Umkehrpunkt befindet. Das erste Korn landet zu einem Zeitpunkt t3 auf dem Prallplattensensor 66, an dem sich das Sieb 44 am oberen, rückwärtigen Umkehrpunkt befindet und das zweite Korn landet zu einem Zeitpunkt t4 auf dem Prallplattensensor 66, an dem sich das Sieb 44 schon wieder in der Bewegung nach unten und vorn befindet. Es ist erkennbar, dass das erste Korn relativ flach auf dem Prallplattensensor 66 landet, während das zweite Korn sehr steil, nämlich fast senkrecht, auf den Prallplattensensor 66 aufprallt. Da der Prallplattensensor 66 für senkrecht aufprallende Körner empfindlicher ist (diese produzieren ein größeres Signal des Signalaufnehmers 70) als für flach aufprallende Körner, wird das erste Korn ein kleineres Signal produzieren als das zweite Korn.

Um zu erreichen, dass beide Körner tatsächlich von der Auswertungsschaltung 72 erfasst werden und ein Ausgangssignal 78 produzieren, wird die aktuelle Stellung des Siebs 44 entlang seiner Bewegungsbahn durch einen Sensor 80 erfasst, der den Winkel eines Hängers 46 gegenüber dem Fahrgestell 12 misst. Das Ausgangssignal des Sensors 80 wird der Auswertungsschaltung 72 zugeführt. Die Auswertungsschaltung 72 erhält somit eine Information hinsichtlich der jeweiligen Lage des Siebs 44 entlang seiner Bewegung. Die Auswertungsschaltung 72 ist konfiguriert, anhand dieser Information die Signale des Signalaufnehmers 74 unterschiedlich zu verarbeiten, um die vom Aufprallwinkel, unter dem das Material auf die Platte 68 aufprallt, abhängige Sensitivität des Prallplattensensors 66 auszugleichen.

Hierzu liegen einem Prozessor der Auswertungsschaltung 72 abgespeicherte Daten vor, in denen ein Zusammenhang zwischen dem Ausgangssignal des Sensors 80 und der zugehörigen Sensitivität des Signalaufnehmers 74 widergespiegelt wird. Dieser Zusammenhang kann bei Versuchen gemessen werden oder er wird anhand von Berechnungen ermittelt.

Im Einzelnen sind unterschiedliche Vorgehensweisen möglich. Bei einer ersten Variante kann die Verstärkung des Verstärkers 74 abhängig von den (basierend auf dem Ausgangssignal des Sensors 80 aus einem Speicher gelesenen) Daten verändert werden. Wenn somit das Ausgangssignal des Sensors 80 darauf hinweist, dass die Körner relativ flach auf die Platte 68 aufprallen, wird die Verstärkung des Verstärkers 74 vergrößert und analog wird die Verstärkung des Verstärkers 74 demgegenüber vermindert, wenn das Ausgangssignal des Sensors 80 darauf hinweist, dass die Körner relativ steil auf die Platte 68 aufprallen. Hierbei können zwei oder mehr Stufen für die Verstärkung verwendet werden.

Bei einer zweiten Variante wird der Schwellenwert, den die Amplitude eines vom Signalaufnehmer 70 erzeugten Signals überschreiten muss, damit ein Ausgangssignal 78 erzeugt wird, abhängig von den (basierend auf dem Ausgangssignal des Sensors 80 aus einem Speicher gelesenen) Daten verändert. Wenn somit das Ausgangssignal des Sensors 80 darauf hinweist, dass die Körner relativ flach auf die Platte 68 aufprallen, wird der Schwellenwert (dessen Amplitude ein vom Signalaufnehmer 70 erzeugtes Signal erreichen oder überschreiten muss, um ein Ausgangssignal 78 zu erzeugen) der Schwellwert-Schaltung 76 niedrig gewählt und analog wird der Schwellenwert der Schwellwert-Schaltung 76 demgegenüber vergrößert, wenn das Ausgangssignal des Sensors 80 darauf hinweist, dass die Körner relativ steil auf die Platte 68 aufprallen. Hierbei können zwei oder mehr Stufen für den Schwellenwert verwendet werden.

Bei einer dritten Variante wird, wenn die basierend auf dem Ausgangssignal des Sensors 80 aus einem Speicher gelesenen Daten darauf hinweisen, dass die Körner unter einem Winkel auf die Platte 68 aufprallen, der flacher als ein bestimmter Grenzwert ist, kein Ausgangssignal 78 abgegeben, d.h. die Signale des Signalaufnehmers 70 werden dann ignoriert. Ein Ausgangssignal 78 wird bei dieser Variante nur abgegeben, wenn das Ausgangssignal des Sensors 80 darauf hinweist, dass die Körner unter einem Winkel auf die Platte 68 aufprallen, der steiler als ein bestimmter Grenzwert ist.

Jeweils zwei oder auch alle dieser Varianten können auch miteinander kombiniert werden, d.h. Schwellenwert und/oder Verstärkung hängen vom Winkel ab und/oder bei flach einfallenden Körnern wird zusätzlich das Signal des Signalaufnehmers 70 ignoriert.

Auf diese Weise wird die Genauigkeit der Erfassung der Körner durch den Prallplattensensor 66 verbessert.

Es sei noch angemerkt, dass der Prallplattensensor 66 - anders als in der Figur 3 gezeigt - nicht nur zur Messung der Verlustkörner am oberen Sieb 44 oder der in die Überkehr einlaufenden Körner am unteren Sieb 44 (ggf. auch zur Bestimmung der seitlichen Verteilung der Körnerzahlen in einer Variante mit mehreren seitlich nebeneinander angeordneten Prallplattensensoren 66) dienen muss, sondern an einer beliebigen anderen Stelle des Mähdreschers 10 eingesetzt werden kann, an denen ein Förderer sich periodisch bewegt und Körner am Ende oder an einer beliebigen anderen Stelle des Förderers durch einen Prallplattensensor 66 erfasst werden. Hierbei kann es sich um ein Vorsieb handeln oder einen beliebigen Förderboden zur Förderung eines Gemischs aus Korn und Verunreinigungen oder um einen Strohschüttler. Hierzu sei auch auf den eingangs diskutierten Stand der Technik verwiesen. Der Prallplattensensor 66 kann sich mit dem Förderer (wie dem Sieb 44) mitbewegen, wie in der Figur 3 gezeigt, oder er ist am Fahrgestell 12 abgestützt, sodass sich der Förderer gegenüber dem Prallplattensensor 66 bewegt. Auch dort tritt das oben beschriebene Problem der abhängig vom Aufprallwinkel der Körner und somit von der Position des Förderers variierenden Sensitivität des Prallplattensensors 66 auf, wenn auch möglicherweise in geringerem Ausmaße, und kann durch die erfindungsgemäße Vorgehensweise vermindert oder gelöst werden.

## Patentansprüche

1. Mähdrescher (10) mit einer Sensoranordnung, umfassend:
einen Förderer für Körner enthaltendes Erntegut, der durch einen Antrieb in eine periodische Bewegung versetzbar ist,
einen dem Förderer zugeordneten Prallplattensensor (66), der konfiguriert ist, in Reaktion auf einen Aufprall eines Korns ein elektrisches Signal abzugeben, und
eine Auswertungsschaltung (72), die signalübertragend mit dem Prallplattensensor (66) verbunden und konfiguriert ist, das vom Prallplattensensor (66) erzeugte Signal zu verarbeiten und unter Berücksichtigung einer weiteren Information ein durch ein Korn erzeugtes Signal zu erkennen und ein entsprechendes Ausgangssignal (78) abzugeben,
**dadurch gekennzeichnet, dass** die weitere Information die jeweilige Lage des Förderers entlang seiner Bewegung betrifft, die Auswertungsschaltung (72) konfiguriert ist, anhand der Information einen von der jeweiligen Lage des Förderers abhängigen Aufprallwinkel des Korns auf den Prallplattensensor (66) zu berücksichtigen, um die vom Aufprallwinkel des Korns abhängige Empfindlichkeit des Prallplattensensors (66) zu kompensieren und dass die Auswertungsschaltung (72) konfiguriert ist, einen von der jeweiligen Lage des Förderers abhängigen Verstärkungsfaktor und/oder einen davon abhängigen Schwellenwert anzuwenden und/oder Signale des Prallplattensensors (66) bei bestimmten Lagen des Förderers zu ignorieren.

2. Mähdrescher (10) nach Anspruch 1, wobei der Prallplattensensor (66) sich mit Förderer bewegt oder stationär ist.

3. Mähdrescher (10) nach Anspruch 1 oder 2, wobei der Förderer durch Hänger (46, 48) an einem Fahrgestell (12) aufgehängt ist und durch den Antrieb in eine pendelnde Bewegung versetzbar ist oder an einer mit dem Antrieb gekoppelten Kurbelwelle angebracht ist.

4. Mähdrescher (10) nach Anspruch 3, wobei das der Förderer ein Sieb (44) oder ein Förderboden oder ein Strohschüttler ist.

## Claims

1. Combine harvester (10) having a sensor arrangement, comprising:
a conveyor for grain-containing crops, which conveyor can be set in a periodic movement by a drive,
a baffle plate sensor (66) which is associated with the conveyor and which is configured to emit an electrical signal in response to an impact of a grain, and
an evaluation circuit (72) which is connected to the baffle plate sensor (66) for signal transmission and is configured to process the signal generated by the baffle plate sensor (66) and, taking into account further information, to recognize a signal generated by a grain and to emit a corresponding output signal (78),
**characterized in that** the further information relates to the respective position of the conveyor along its movement, the evaluation circuit (72) is configured to use the information to take into account an impact angle of the grain on the baffle plate sensor (66) that is dependent on the respective position of the conveyor, in order to compensate for the sensitivity of the baffle plate sensor (66) that is dependent on the impact angle of the grain, and **in that** the evaluation circuit (72) is configured to apply an amplification factor dependent on the respective position of the conveyor and/or a threshold value dependent thereon and/or to ignore signals from the baffle plate sensor (66) at certain positions of the conveyor.

2. Combine harvester (10) according to Claim 1, wherein the baffle plate sensor (66) moves with the conveyor or is stationary.

3. Combine harvester (10) according to Claim 1 or 2, wherein the conveyor is suspended from a chassis (12) by hangers (46, 48) and can be set in an oscillating motion by the drive, or it is attached to a crankshaft coupled to the drive.

4. Combine harvester (10) according to Claim 3, wherein the conveyor is a screen (44) or a conveyor floor or a straw walker.

## Revendications

1. Moissonneuse-batteuse (10) pourvue d'un agencement de capteurs, comprenant :
un convoyeur pour un produit récolté contenant des grains, pouvant être mis en mouvement périodique par un entraînement,
un capteur à plaque d'impact (66) associé au convoyeur, configuré pour émettre un signal électrique en réponse à l'impact d'un grain, et
un circuit d'évaluation (72), relié au capteur à plaque d'impact (66) de manière à transmettre des signaux et configuré pour traiter le signal généré par le capteur à plaque d'impact (66) et, en tenant compte d'une information supplémentaire, reconnaître un signal généré par un grain et émettre un signal de sortie (78) correspondant,
**caractérisée en ce que** l'information supplémentaire concerne la position respective du convoyeur le long de son mouvement, **en ce que** le circuit d'évaluation (72) est configuré pour tenir compte, sur la base de cette information, d'un angle d'impact du grain sur le capteur à plaque d'impact (66) dépendant de la position respective du convoyeur, afin de compenser la sensibilité du capteur à plaque d'impact (66) dépendant de l'angle d'impact du grain, et **en ce que** le circuit d'évaluation (72) est configuré pour appliquer un facteur d'amplification dépendant de la position respective du convoyeur et/ou un seuil dépendant de celle-ci et/ou pour ignorer les signaux du capteur à plaque d'impact (66) dans certaines positions du convoyeur.

2. Moissonneuse-batteuse (10) selon la revendication 1, dans laquelle le capteur à plaque d'impact (66) se déplace avec le convoyeur ou est stationnaire.

3. Moissonneuse-batteuse (10) selon la revendication 1 ou 2, dans laquelle le convoyeur est suspendu à un châssis (12) par des éléments de suspension (46, 48) et peut être mis en mouvement pendulaire par l'entraînement ou est monté sur un vilebrequin couplé à l'entraînement.

4. Moissonneuse-batteuse (10) selon la revendication 3, dans laquelle le convoyeur est un tamis (44), un fond de convoyage ou un secoueur de paille.
